# EUROPÄISCHE PATENTANMELDUNG

(11) **EP 4 796 813 A1**
(43) Veröffentlichungstag der Anmeldung: **26.08.2026**
(21) Anmeldenummer: 25159257.2
(22) Anmeldetag: 21.02.2025
(51) Int. Cl.: F16H 57/04

(54) **LUFTLEITHAUBENANORDNUNG FÜR EIN GETRIEBE**

(71) Anmelder: Flender GmbH, 46395 Bocholt (DE); Flender Industriegetriebe GmbH, 09322 Penig (DE)
(72) Erfinder: DÜTHMANN, Marina, 46395 Bocholt (DE); DÜVEL, Volker, 46395 Bocholt (DE)
(74) Vertreter: Michalski Hüttermann & Partner mbB

(57) **Zusammenfassung**

Luftleithaubenanordnung 10 für ein Getriebe 40 zur umfänglichen Anordnung um eine Getriebeeingangswelle 46 des Getriebes 40, umfassend ein erstes Haubenmodul 12 und ein zweites Haubenmodul 14, wobei das erste Haubenmodul 12 eine durch ein Blechmaterial des Haubenmoduls 12 umgebene Öffnung 16 ausbildet, und wobei das erste Haubenmodul 12 und das zweite Haubenmodul 14 verbunden sind und das die Öffnung 16 ausbildende Blechmaterial des ersten Haubenmoduls 12 und ein Blechmaterial des zweiten Haubenmoduls 14 in einem Abstand zueinander im Wesentlichen parallel zueinander angeordnet sind. Durch die Modularisierung der Luftleithauben kann mit wenigen komplexen Bauteilen eine große Anzahl an Anwendungsfällen in Form von Einbaulagen, Getriebegrößen und -typen, erreicht werden.

## Beschreibung

Die Erfindung betrifft eine Luftleithaubenanordnung und ein Getriebe mit einer Luftleithaubenanordnung zur umfänglichen Anordnung um eine Getriebeeingangswelle des Getriebes, mit einem ersten Haubenmodul, welches eine durch ein Blechmaterial des Haubenmoduls umgebene Öffnung ausbildet.

Getriebe haben eine thermische Leistungsgrenze aufgrund der Wärmeentwicklung während ihres Betriebs. In manchen Fällen liegt die thermische Leistungsgrenze unterhalb der mechanischen Leistungsgrenze. In diesen Fällen ist eine Kühlung erforderlich, um die thermische Leistungsgrenze anzuheben und optimalerweise der mechanischen Leistungsgrenze anzugleichen. Die Kühlung kann mit verschiedenen Möglichkeiten erfolgen. Eine Möglichkeit besteht in der Luftkühlung. Es gibt zwei Hauptvarianten der Luftkühlung, nämlich den Wellenlüfter, der durch die Antriebswelle permanent mitgenommen wird, und den elektrisch betriebenen Lüfter bzw. Elektrolüfter. Beide Lüftervarianten sind außerhalb des Getriebes verortet und führen daher zu zugänglichen drehbaren Teilen, die ein Verletzungsrisiko darstellen können. Aus diesem Grund wird eine Schutzhaube benötigt. Im Zusammenhang mit der Luftkühlung wird diese Schutzhaube zur Luftleithaubenanordnung, um zusätzlich zu dem Schutz vor drehenden Teilen - Schutzfunktion - eine bessere Leitung der Kühlluft zu gewährleisten - Kühlfunktion. Jede Luftleithaubenanordnung hat einen definierten Lufteinlass und einen Luftaustrittsbereich. Es gibt Luftleithaubenanordnungen für Stirnrad- und Kegelstirnradgetriebe in verschiedenen Baugrößen, Übersetzungen und Getriebestufenanzahlen. Dies führt zu einer hohen Vielfalt, um für jede Getriebevariante eine passende Luftleithaubenanordnung bereitzustellen, was eine logistische Herausforderung darstellt. Aus der WO 2021/180484 A1 ist eine Luftleithaubenanordnung bekannt. Es besteht ein ständiges Bedürfnis die Vielfalt an möglichen Luftleithaubenanordnung für verschiedene Getriebetypen- und -größen zu reduzieren.

Es ist die Aufgabe der Erfindung Maßnahmen aufzuzeigen, die es ermöglichen die Vielfalt an möglichen Luftleithaubenanordnung für verschiedene Getriebetypen- und größen zu reduzieren.

Die Lösung der Aufgabe erfolgt durch eine Luftleithaubenanordnung mit den Merkmalen des Anspruchs 1 sowie mit den Merkmalen des Anspruchs 8. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Luftleithaubenanordnung für ein Getriebe zur umfänglichen Anordnung um eine Getriebeeingangswelle des Getriebes, umfassend ein erstes Haubenmodul und ein zweites Haubenmodul, wobei das erste Haubenmodul eine durch ein Blechmaterial des Haubenmoduls umgebene Öffnung ausbildet, und wobei das erste Haubenmodul und das zweite Haubenmodul verbunden sind und das die Öffnung ausbildende Blechmaterial des ersten Haubenmoduls und ein Blechmaterial des zweiten Haubenmoduls in einem Abstand zueinander im Wesentlichen parallel zueinander angeordnet sind.

Das Getriebe umfasst ein Getriebegehäuse, bei dem es sich um ein Universalgehäuse handeln kann, welches für eine Aufstellweise auf allen sechs Gehäuseseiten geeignet ist. Das Getriebegehäuse kann in verschiedenen Aufstellweisen montiert werden. Im Allgemeinen sind dies die aufrechte, die horizontale und die vertikale Aufstellweise. Die Luftleithaubenanordnung ist in jeder dieser Aufstellweisen einsetzbar. Es ist folglich nicht mehr erforderlich unterschiedliche Luftleithaubenanordnung für die unterschiedlichen Aufstellweisen vorzuhalten.

Das erste Haubenmodul kann als Lüftermodul bezeichnet werden und dient zur Erfüllung der Schutzfunktion und der Kühlfunktion. Das erste Haubenmodul ist hierbei so dimensioniert, dass während des Betriebs eine ausreichende Kühlfunktion gewährleistet ist. Das zweite Haubenmodul, das mit dem ersten Haubenmodul verbunden ist, verbessert die Kühlleistung bzw. den Kühleffekt, so dass die thermische Leistungsgrenze gesteigert wird und optimalerweise bis an die mechanische Leistungsgrenze heranreicht. Das erste Haubenmodul kann zudem so gestaltet sein, dass es in vertikaler Richtung verschiebbar ist, sodass die Oberseite des Getriebes effektiver gekühlt werden kann. Hierzu kann das erste Haubenmodul mit Langlöchern bei den Montagepunkten versehen sein. Die Luftleithaubenanordnung kann bei einem Getriebe mit Elektrolüftern zum Einsatz kommen.

In einer bevorzugten Ausgestaltung der Luftleithaubenanordnung kann vorgesehen sein, dass das erste und/oder das zweite Haubenmodul jeweils zwei rechtwinklig zueinander stehende Haubenflanken aufweisen. Hierdurch ist gewährleistet, dass die Luftleithaubenanordnung zumindest teilweise wie eine Einhausung des Getriebes fungiert.

In einer zudem bevorzugten Ausgestaltung der Luftleithaubenanordnung sind das erste und das zweite Haubenmodul über ein Zusatzblech miteinander mittelbar verbunden. Es kann vorgesehen sein, dass das Zusatzblech mit einem der Haubenmodule beispielsweise verschraubt oder vernietet ist und an das andere Haubenmodul stumpf stößt oder dieses überlappt. Hierbei kann ein Zusatzblech insbesondere dann zum Einsatz kommen, wenn das erste und das zweite Haubenmodul in einer Richtung ihrer Ausdehnung unterschiedliche Maße aufweisen, so dass das Zusatzblech zwischen den beiden Maßen vermittelt.

In einer weiterhin bevorzugten Ausgestaltung der Luftleithaubenanordnung ist das eine der beiden Haubenmodule symmetrisch zu einer Mittelachse M ausgeformt. Insbesondere kann vorgesehen sein, dass das symmetrisch ausgeformte Haubenmodul aus mehreren, insbesondere aus zwei, Blechmaterialteilen zusammengesetzt ist.

Bevorzugt können Ausgestaltungen sein, bei denen in dem Blechmaterial des ersten und/oder des zweiten Haubenmoduls durch eine Materialschwächung abgegrenzte Ausbrechbereiche vorgesehen sind, um die Ausbrechbereiche bedarfsweise aus dem Blechmaterial zu entfernen. Somit kann das Haubenmodul auch eingesetzt werden, wenn z.B. ein Sensor, eine Ölleitung oder ein spezieller Lagerdeckel die Kontur stört. In dem Fall wird an der entsprechenden Stelle während der Montage eine dieser Ausbrechbereiche entfernt und das Haubenmodul angebaut werden, ohne eine weitere Variante vorher konstruktiv erstellen zu müssen.

Die Aufgabe wird auch gelöst durch eine Luftleithaubenanordnung für ein Getriebe zur umfänglichen Anordnung um eine Getriebeeingangswelle des Getriebes, umfassend ein erstes Haubenmodul, welches eine durch ein Blechmaterial des Haubenmoduls umgebene Öffnung ausbildet, wobei das erste Haubenmodul ausgehend von dem die Öffnung ausbildenden Blechmaterial einen rechtwinklig abgesetzten und umfänglich zumindest weitestgehend geschlossenen Kragen aus dem Blechmaterial ausformt und mit dem Kragen zumindest ein zweites Haubenmodul verbunden ist. Hierbei kann das erste Haubenmodul symmetrisch zu einer Mittelachse M ausgeformt sein. Zudem kann das erste Haubenmodul aus mehreren, insbesondere aus zwei, Blechmaterialteilen zusammengesetzt sein. Eine solche Ausgestaltung der Luftleitanordnung kann insbesondere bei Kegelstirnradgetrieben zum Einsatz kommen.

Die Aufgabe wird auch gelöst durch ein Getriebe mit einer Lüfteranordnung, umfassend zumindest ein Lüfterrad und eine Luftleithaubenanordnung wie zuvor beschrieben. Hierbei kann das zumindest eine Lüfterrad drehfest mit einer Getriebeeingangswelle des Getriebes verbunden sein oder das Lüfterrad als Elektrolüfter ausgebildet sein. Hierbei kann das Getriebe als Stirnradgetriebe oder als Kegelstirnradgetriebe ausgebildet sein.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Draufsicht auf ein Stirnradgetriebe mit einer Luftleithaubenanordnung,
Fig. 2: eine Ausgestaltung einer Luftleithaubenanordnung für ein Getriebe nach Fig.1,
Fig. 3a), 3b): eine Ausführung eines ersten Haubenmoduls und ein Zusatzblech für eine Luftleithaubenanordnung,
Fig. 4: eine Ausgestaltung einer Luftleithaubenanordnung für ein Kegelstirnradgetriebe und
Fig. 5: eine Ausgestaltung einer Luftleithaubenanordnung für ein Stirnradgetriebe mit Elektrolüfter.

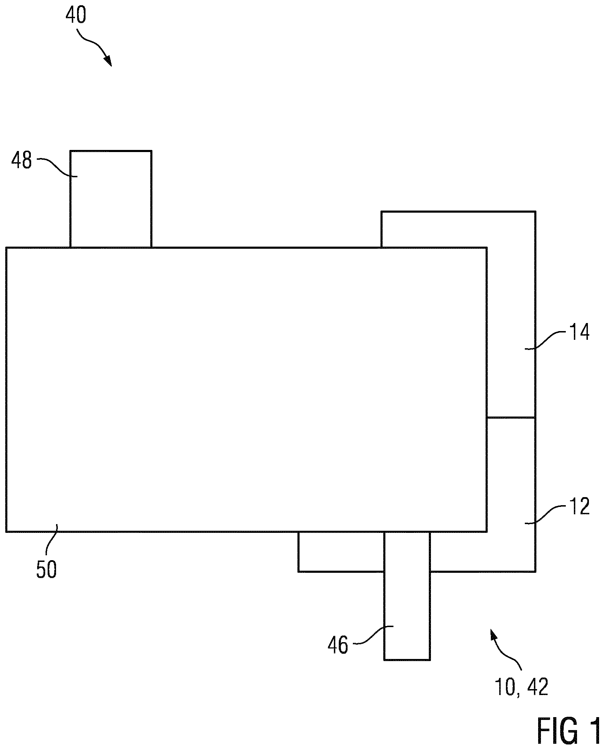

Die Figur 1 zeigt in einer schematischen Draufsicht ein Getriebe 40 in Form eines Stirnradgetriebes. Das Getriebe 40 kann auch als Kegelstirnradgetriebe ausgeführt sein. Das Getriebe 40 ist anhand eines Getriebegehäuses 50, einer Getriebeeingangswelle 46 und einer Getriebeausgangswelle 48 dargestellt. Zudem ist eine Luftleithaubenanordnung 10 gezeigt, die vorliegend auf der Seite der Getriebeeingangswelle 46 das Getriebegehäuses 50 teilweise umschließend angeordnet ist. Die Luftleithaubenanordnung 10 umfasst ein erstes Haubenmodul 12 und ein zweites Haubenmodul 14.

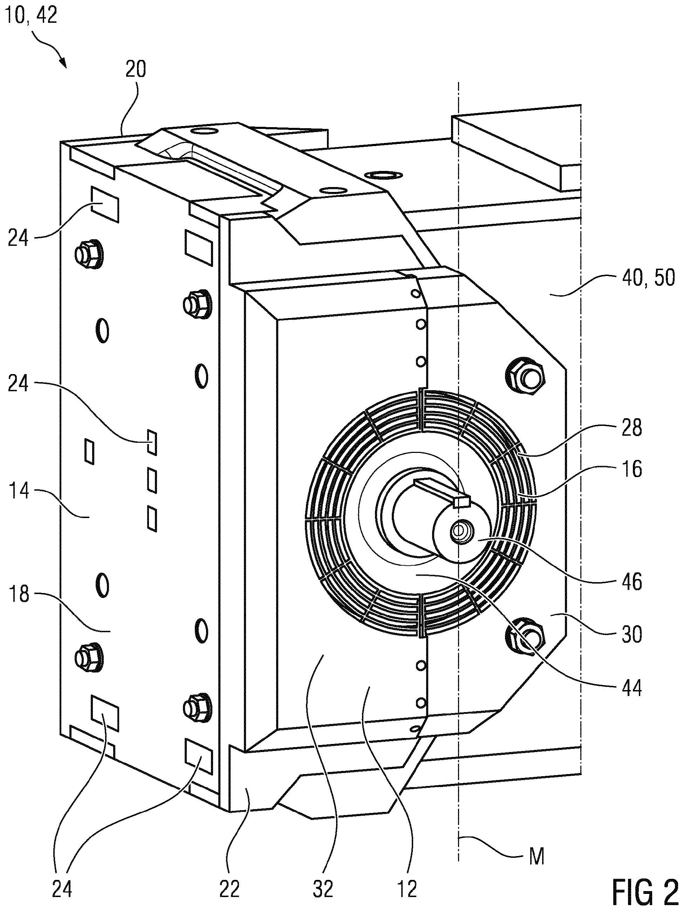

Die Figur 2 zeigt eine mögliche Ausgestaltung einer Luftleithaubenanordnung 10 mit einem ersten Haubenmodul 12 und einem zweiten Haubenmodul 14. Zu erkennen ist, dass ein Blechmaterial des ersten Haubenmoduls 12 eine Öffnung 16 ausbildet, die die Getriebeeingangswelle 46 des Getriebes 40 umgibt. Die Öffnung 16 wiederum ist umgeben von einem Luftgitter 28, das rund sein kann. Innerhalb des ersten Haubenmoduls 12 ist hinter dem Luftgitter 28 ein mit der Getriebeeingangswelle 46 vorliegend permanent drehfest verbundenes Lüfterrad 44 angeordnet. Das erste Haubenmodul 12 und das zweite Haubenmodul 14 sind miteinander verbunden, wobei beide Module 12, 14 vorliegend ein unterschiedliches vertikales Höhenmaß haben. Um dieses unterschiedliche vertikale Höhenmaß beider Module 12, 14 gegeneinander zu vermitteln, ist in dem Verbindungbereich ein Zusatzblech 22 angeordnet. Das Zusatzblech 22 verbinden die beiden Haubenmodule 12, 14 mittelbar miteinander.

Das die Öffnung 16 ausbildende Blechmaterial des ersten Haubenmoduls 12 und ein Blechmaterial des zweiten Haubenmoduls 14 sind in einem Abstand zueinander im Wesentlichen parallel zueinander angeordnet. Hierdurch umgibt die Luftleithaubenanordnung 10 das Getriebe 40 teilweise U-förmig, so dass in diesem umgebenden Bereich die Kühlluft strömen kann. Das zweite Haubenmodul 14 weist vorliegend zwei rechtwinklig zueinander stehende Haubenflanken 18, 20 auf. Es kann auch vorgesehen sein, dass beide Haubenmodule 12, 14 jeweils zwei stehende Haubenflanken 18, 20 aufweisen, wie dies in Figur 1 schematisch dargestellt ist. Wiederum alternativ kann nur das erste Haubenmodul 12 zwei rechtwinklig zueinander stehende Haubenflanken 18, 20 aufweisen, was aber nicht dargestellt ist. Das erste Haubenmodul 12 kann, wie vorliegend dargestellt, symmetrisch zu einer Mittelachse M ausgeformt sein. Weiterhin kann das symmetrisch ausgeformte Haubenmodul 12, 14, vorliegend ist es das erste Haubenmodul 12, aus zwei Blechmaterialteilen 30, 32 zusammengesetzt sein.

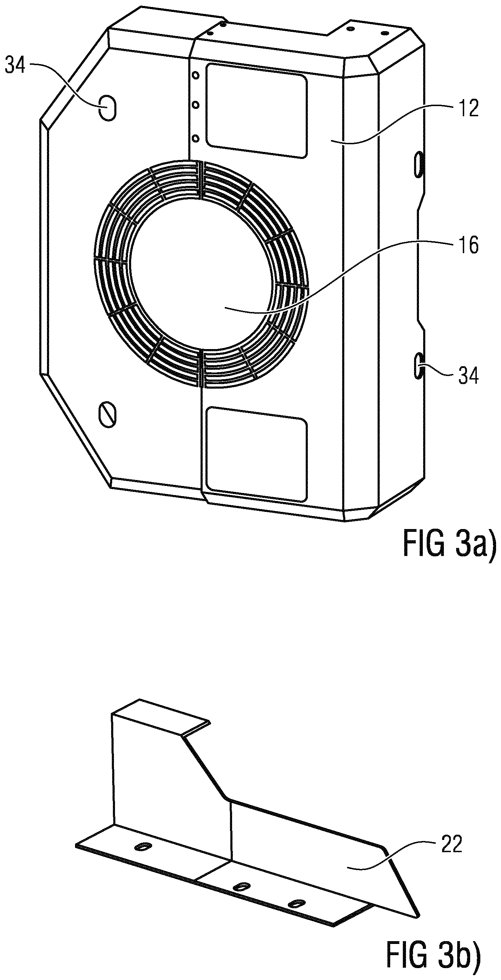

Die Figur 3a) zeigt eine weitere Ausführung eines ersten Haubenmoduls 12. Zu erkennen sind Langlöcher 34 über die das Haubenmodul 12 gegenüber Montagepunkten am Getriebegehäuse 50 - nicht dargestellt - bzgl. der Positionierung variiert werden kann. Mit dem Bezugszeichen 24 sind Ausbrechbereiche bezeichnet, die in dem Blechmaterial des ersten und/oder des zweiten Haubenmoduls 12, 14 durch eine Materialschwächung vorgesehen sein können, um die Ausbrechbereiche 24 bedarfsweise aus dem Blechmaterial entfernen zu können. Die Figur 3b) zeigt eine Ausführungsform eines Zusatzblechs 22.

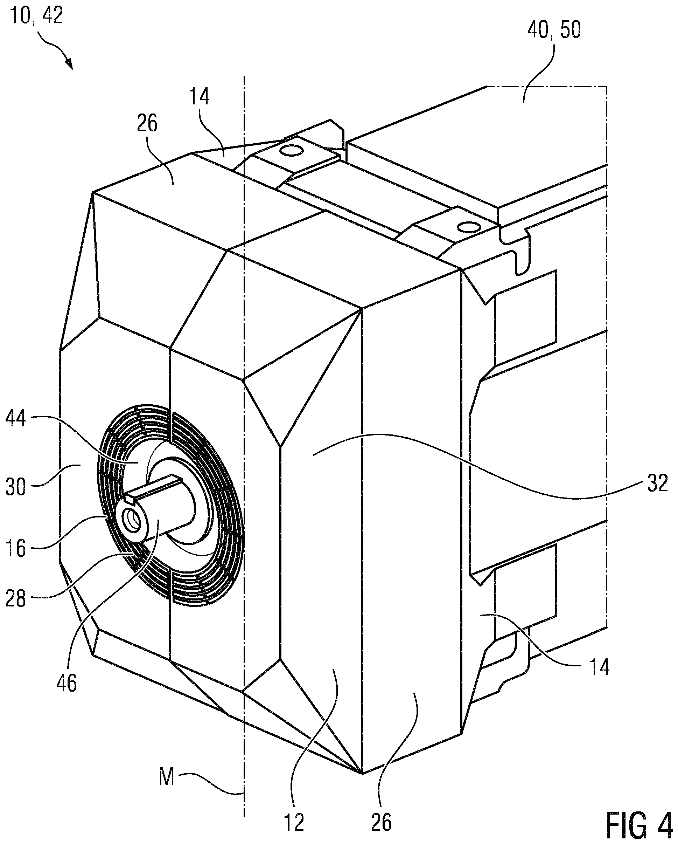

Die Figur 4 zeigt für ein Kegelstirnradgetriebe 40 eine mögliche Ausgestaltung einer Luftleithaubenanordnung 10 mit einem ersten Haubenmodul 12 und einem zweiten Haubenmodul 14. Das erste Haubenmodul 12 bildet auch hier eine durch ein Blechmaterial des Haubenmoduls 12 umgebene Öffnung 16 aus. Das erste Haubenmodul 12 formt ausgehend von dem die Öffnung 16 ausbildenden Blechmaterial einen rechtwinklig abgesetzten und umfänglich zumindest weitestgehend geschlossenen Kragen 26 aus. Mit dem Kragen 26 ist auf der einen Seite des Getriebes 40 ein zweites Haubenmodul 14 verbunden. Auf der anderen Seite des Getriebes 40 ist ein weiteres zweites Haubenmodul 14 mit dem Kragen 26 verbunden. Für diese Variante kann das erste Haubenmodul 12 mit zwei gleichen Haubenmodulen 14 ausgestattet werden. Es können aber auch unterschiedliche Haubenmodule je Seite genutzt werden. Die beiden zweiten Haubenmodule 14 erweitern die Luftleitanordnung 10 in axialer Richtung des Getriebes 40. Das erste Haubenmodul 12 kann auch in seiner Variante für Kegelstirnradgetriebe 40 symmetrisch zu einer Mittelachse M ausgeformt sein und aus zwei Blechmaterialteilen 30, 32 zusammengesetzt sein.

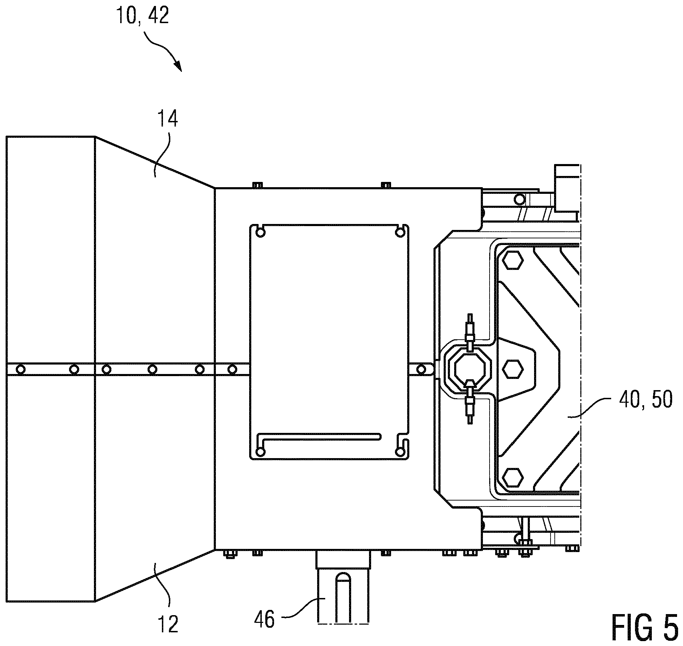

Die Figur 5 zeigt für ein Stirnradgetriebe 40 eine mögliche Ausgestaltung einer Luftleithaubenanordnung 10 für den Einsatz von Elektrolüftern. Elektrolüfter sind vorliegend nicht dargestellt.

Die Ausgestaltung einer Luftleithaubenanordnung 10 für Kegelstirnrad- und Stirnradgetriebe bilden einen optimierten Kompromiss aus effektiver Wärmeabfuhr, Teilevielfalt, Kombinatorik mit Anbauoptionen und Kosten. Durch die Modularisierung der Luftleithauben kann mit wenigen komplexen Bauteilen eine große Anzahl an Anwendungsfällen in Form von Einbaulagen, Getriebegrößen und -typen, erreicht werden. Zusätzlich ist die Luftleithaubenanordnung 10 mit numerischer Simulation der Luftführung entwickelt. Durch die Ergebnisse der Simulationen kann die Kontur so angepasst werden, dass Verwirbelungen reduziert und der Kühleffekt maximiert wird. Dadurch ergibt sich bei Verwendung dieser Luftleithaubenanordnung 10 eine verbesserte Kühlung.

### Bezugszeichenliste

- 10: Luftleithaubenanordnung
- 12: Haubenmodul
- 14: Haubenmodul
- 16: Öffnung
- 18: Haubenflanke
- 20: Haubenflanke
- 22: Zusatzblech
- 24: Ausbrechbereich
- 26: Kragen
- 28: Luftgitter
- 30: Teil
- 32: Teil
- 34: Langlöcher
- 40: Getriebe
- 42: Lüfteranordnung
- 44: Lüfterrad
- 46: Getriebeeingangswelle
- 48: Getriebeausgangswelle
- 50: Getriebegehäuse

## Patentansprüche

1. Luftleithaubenanordnung (10) für ein Getriebe (40) zur umfänglichen Anordnung um
eine Getriebeeingangswelle (46) des Getriebes (40), umfassend
ein erstes Haubenmodul (12) und ein zweites Haubenmodul (14),
wobei das erste Haubenmodul (12) eine durch ein Blechmaterial des Haubenmoduls (12) umgebene Öffnung (16) ausbildet, und
wobei das erste Haubenmodul (12) und das zweite Haubenmodul (14) verbunden sind und das die Öffnung (16) ausbildende Blechmaterial des ersten Haubenmoduls (12) und ein Blechmaterial des zweiten Haubenmoduls (14) in einem Abstand zueinander im Wesentlichen parallel zueinander angeordnet sind.

2. Luftleithaubenanordnung (10) nach Anspruch 1, **dadurch gekennzeichnet, dass** das erste (12) und/oder das zweite Haubenmodul (14) jeweils zwei zumindest weitestgehend rechtwinklig zueinander stehende Haubenflanken (18, 20) aufweisen.

3. Luftleithaubenanordnung (10) nach Anspruch 1 oder 2, **dadurch gekennzeichnet, dass** das erste (12) und das zweite Haubenmodul (14) über ein Zusatzblech (22) miteinander mittelbar verbunden sind.

4. Luftleithaubenanordnung (10) nach Anspruch 3, **dadurch gekennzeichnet, dass** das ersten (12) und das zweite Haubenmodul (14) in einer Richtung ihrer Ausdehnung unterschiedliche Maße aufweisen und das Zusatzblech (22) zwischen den beiden Maßen vermittelt.

5. Luftleithaubenanordnung (10) nach einem der Ansprüche 1 bis 4, **dadurch gekennzeichnet, dass** das eine der beiden Haubenmodule (12, 14) symmetrisch zu einer Mittelachse (M) ausgeformt ist.

6. Luftleithaubenanordnung (10) nach Anspruch 5, **dadurch gekennzeichnet, dass** das symmetrisch ausgeformte Haubenmodul (12, 14) aus mehreren, insbesondere aus zwei, Blechmaterialteilen zusammengesetzt ist.

7. Luftleithaubenanordnung (10) nach einem der Ansprüche 1 bis 5, **dadurch gekennzeichnet, dass** in dem Blechmaterial des ersten (12) und/oder des zweiten Haubenmoduls (14) durch eine Materialschwächung abgegrenzte Ausbrechbereiche (24) vorgesehen sind, um die Ausbrechbereiche (24) bedarfsweise aus dem Blechmaterial zu entfernen.

8. Luftleithaubenanordnung (10) für ein Getriebe (40) zur umfänglichen Anordnung um eine Getriebeeingangswelle (46) des Getriebes (40), umfassend ein erstes Haubenmodul (12), welches eine durch ein Blechmaterial des Haubenmoduls (12) umgebene Öffnung (16) ausbildet, wobei das erste Haubenmodul (12) ausgehend von dem die Öffnung (16) ausbildenden Blechmaterial einen rechtwinklig abgesetzten und umfänglich zumindest weitestgehend geschlossenen Kragen (26) aus dem Blechmaterial ausformt und mit dem Kragen (26) zumindest ein zweites Haubenmodul (14) verbunden ist.

9. Luftleithaubenanordnung (10) nach Anspruch 8, **dadurch gekennzeichnet, dass** das erste Haubenmodul (12) symmetrisch zu einer Mittelachse M ausgeformt ist.

10. Luftleithaubenanordnung (10) nach Anspruch 8 oder 9, **dadurch gekennzeichnet, dass** das erste Haubenmodul (12) aus mehreren, insbesondere aus zwei, Blechmaterialteilen zusammengesetzt ist.

11. Getriebe (40) mit einer Lüfteranordnung (42), die Lüfteranordnung (42) umfassend zumindest ein Lüfterrad (44) und eine Luftleithaubenanordnung (10) nach einem der vorangegangenen Ansprüche.

12. Getriebe (40) nach Anspruch 11, **dadurch gekennzeichnet, dass** das zumindest eine Lüfterrad (44) drehfest mit einer Getriebeeingangswelle (46) des Getriebes (40) verbunden ist oder das Lüfterrad (44) als Elektrolüfter ausgebildet ist.

13. Getriebe (40) nach Anspruch 11 oder 12, **dadurch gekennzeichnet, dass** das Getriebe (40) als Stirnradgetriebe oder als Kegelstirnradgetriebe ausgebildet ist.
